# FASCICULE DE BREVET EUROPEEN

(11) **EP 2 541 410 B1**
(45) Date de publication et mention de la délivrance du brevet: **15.11.2017**
(21) Numéro de dépôt: 12173725.8
(22) Date de dépôt: 27.06.2012
(51) Int. Cl.: G06F 9/445, G06F 9/455, G06F 9/50

(54) **Procédé de fourniture de service d'exécution de logiciel à la demande**
Verfahren zur On-Demand Lieferung eines Software-Ausführungsdienstes
Method for providing a service for on-demand software execution

(30) Priorité: 27.06.2011 FR 1155672
(43) Date de publication de la demande: 02.01.2013
(73) Titulaire: Orange, 75015 Paris (FR)
(72) Inventeur: Orveillon, Laurent, 22730 Tregastel (FR); Vandenbussche, Armand, 22300 Lannion (FR)
(74) Mandataire: Regimbeau

(56) Documents cités:
- EP-A1- 2 075 694
- FR-A1- 2 885 429
- US-A1- 2008 104 608
- US-A1- 2010 228 819
- US-A1- 2011 106 949

## Description

La présente invention se rapporte au domaine du logiciel en tant que service, également connus sous le sigle SaaS (sigle de « *Software as a Service* » en terminologie anglo-saxonne).

En matière de fourniture de logiciel à la demande, il est possible d'utiliser la technique dite de « virtualisation ».

La virtualisation est une technique permettant de faire fonctionner un système d'exploitation et des applications (par exemple des logiciels), dans une machine virtuelle. Selon cette technique, le système d'exploitation et les applications n'ont pas accès directement aux périphériques matériels de la machine physique qui les met en oeuvre.

Les applications virtualisées ont accès aux périphériques matériels via un « hyperviseur ». L'hyperviseur est un programme qui a pour fonction d'émuler des périphériques pour les machines virtuelles en utilisant les périphériques matériels réellement présents sur la machine physique.

La virtualisation peut être utilisée pour offrir l'exécution à distance de logiciels dans des machines d'un réseau informatique. Ces services sont connus sous l'expression anglaise *"cloud computing".*

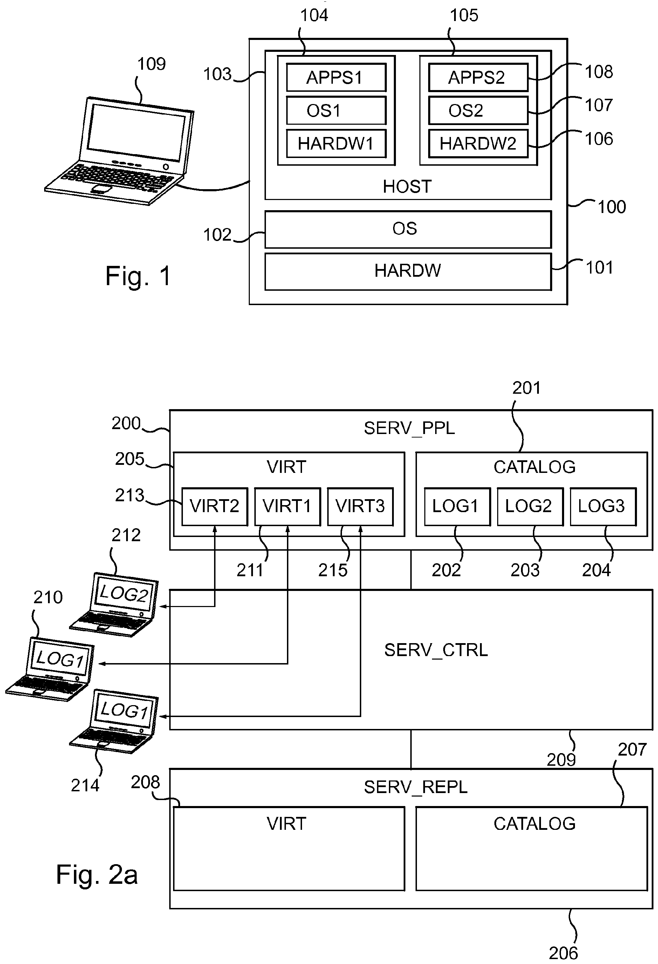

La **figure 1** illustre la structure logicielle et matérielle d'un serveur de virtualisation 100, c'est-à-dire un serveur mettant en oeuvre des machines virtuelles.

Le serveur comporte un ensemble de périphériques 101 (HARDW) utilisés pour son fonctionnement comme par exemple un ou plusieurs processeurs, des unités de mémoire vive, des unités de stockage (des disques durs par exemple), des unités de communication ou tout autre matériel. Le serveur fonctionne sous le contrôle d'un système d'exploitation 102 (OS) qui gère l'utilisation des périphériques par le serveur et l'exécution d'un module hyperviseur 103 (HOST). Le module hyperviseur fait l'interface entre des machines virtuelles 104, 105 et les périphériques réels 101 du serveur. Deux machines virtuelles sont représentées sur la figure 1, mais on peut envisager l'exécution d'un autre nombre de machines virtuelles.

Chaque machine virtuelle 104 et 105 permet de donner accès à un terminal utilisateur 109 (ou plusieurs terminaux) connecté au serveur 100 à des périphériques 106 émulés (HARW1, HARDW2), à un système d'exploitation 107 (OS1, OS2) et à des applications 108 (APPS1, APPS2) comme s'ils étaient présents sur le terminal 109 lui-même.

Les machines virtuelles permettent de proposer des services de logiciel à la demande. Selon ces services, un utilisateur peut mettre en oeuvre des logiciels qui sont exécutés par des serveurs d'un réseau d'opérateur. Il n'est alors plus nécessaire pour l'utilisateur de disposer d'une machine performante et spécifiquement adaptée à l'utilisation d'un logiciel, ni de se préoccuper de l'installation du logiciel sur son terminal. Par exemple, l'utilisateur peut aussi bien avoir accès à des jeux qui nécessitent des performances élevées en matière de matériel qu'à des applications de bureautiques moins exigeantes.

Selon de tels services, un utilisateur dispose d'un terminal (ordinateur personnel, Set Top Box, tablette tactile ou autre) connecté au réseau d'un opérateur fournissant un service de fourniture de logiciel à la demande et envoie une demande d'utilisation d'un logiciel donné.

Un serveur du réseau reçoit cette demande et démarre alors une machine virtuelle pour cet utilisateur rendant ainsi disponible le logiciel demandé sur le terminal de l'utilisateur via un protocole de diffusion (comme par exemple VNC sigle de « Virtual Network Computing » en terminologie anglo-saxonne, MpeG2, ou autre)

Lors de la fermeture de l'application, un ordre est envoyé par l'utilisateur et la machine virtuelle est arrêtée et le contexte de l'utilisateur peut être détruit.

A chaque instant, une machine virtuelle peut être représentée par un ensemble de données représentant :
- le système d'exploitation de la machine virtuelle,
- les logiciels mis en oeuvre dans ce système d'exploitation,
- l'état de la machine virtuelle, c'est-à-dire l'état des périphériques simulés par la machine virtuelle (disque dur, souris ou autre), et
- le contexte d'utilisation de la machine virtuelle, c'est-à-dire les données issues de l'exécution d'une application (fichiers temporaires par exemple).

Pour lancer une machine virtuelle et mettre un logiciel à la disposition d'un utilisateur, il suffit alors d'assembler les données correspondant au logiciel souhaité, au système d'exploitation associé, aux périphériques nécessaires à l'exécution du logiciel et au contexte d'utilisation de l'utilisateur.

Les documents US2011/1069949 et US 2008/104608 décrivent des procédés de répartition de charge dans un réseau incluant des machines virtuelles.

Avec les architectures des machines virtuelles actuellement proposées, il faut créer autant d'ensembles de données (système d'exploitation, logiciel, état de la machine et contexte utilisateur) que d'utilisateurs simultanés.

Cela pose des problèmes de charge du serveur de virtualisation, surtout lorsque l'on souhaite offrir le service de logiciel à la demande à grande échelle.

En effet, il est difficile de choisir un nombre fixe de serveurs à l'avance pour faire face aux demandes des utilisateurs étant donné que cette demande peut fortement évoluer selon un grand nombre de paramètres comme par exemple le succès d'un logiciel en particulier, la période de la journée ou autre.

Il existe donc un besoin pour faciliter la fourniture d'un service de logiciel à la demande à grande échelle qui permette une adaptation rapide et efficace aux besoins des utilisateurs.

A cet effet, selon un premier aspect de l'invention, on propose un procédé de fourniture de service d'exécution de logiciel à la demande tel que défini à la revendication 1.

L'invention propose de tirer parti, d'une part de la représentation des machines virtuelles en plusieurs ensembles de données correspondant au système d'exploitation, aux logiciels et à l'état machine, et d'autre part des techniques de distribution de fichiers.

A cet effet, les données représentant les machines virtuelles sont regroupées sous forme de fichiers (dits « fichiers image ») que l'on peut manipuler et partager.

Ces fichiers sont ensuite distribués dans un réseau de fichiers selon des règles de distribution de la charge entre les serveurs.

Les fichiers images permettent de subdiviser la représentation de la machine virtuelle selon plusieurs fichiers image, dont au moins trois correspondent respectivement au système d'exploitation, aux applications, et à l'état machine. L'exécution d'une machine virtuelle peut alors se faire par concaténation de ces trois fichiers. L'exécution peut également se faire par concaténation de plus de trois fichiers, par exemple dans le cas du lancement de plusieurs logiciels sous le même système d'exploitation.

On peut alors optimiser l'espace mémoire du serveur mettant en oeuvre un ensemble de machines virtuelles pour les offrir en utilisation.

L'utilisation de fichiers image pour lancer des machines virtuelles permet de réduire le laps de temps qui va s'écouler entre la demande d'accès à un logiciel par un utilisateur et son utilisation, et minimiser l'espace mémoire du serveur physique utilisé par toutes les machines virtuelles créées par plusieurs utilisateurs simultanés.

Le lancement du logiciel souhaité par l'utilisateur se fait alors par simple lecture de fichiers déjà disponibles.

Pour faire face à l'évolution de la demande des utilisateurs, les fichiers images sont répartis de manière à tenir compte de la charge des serveurs qui mettent en oeuvre les machines virtuelles et les requêtes d'exécution de logiciels sont redirigées selon l'évolution de cette répartition.

Cela permet alors la mise en oeuvre d'un service de logiciel à la demande rapide d'exécution pour les utilisateurs (car les machines virtuelles sont lancées de manière rapide grâce à l'utilisation des fichiers image) et souple à mettre en oeuvre pour l'opérateur du service (car il peut optimiser le nombre de serveurs à déployer).

Le serveur peut être sélectionné parce qu'il stocke au moins un fichier de l'ensemble de fichiers pour l'exécution du au moins un logiciel.

Alternativement, le procédé peut comporter en outre une étape de demande de stockage auprès du au moins un serveur sélectionné, d'au moins un fichier de l'ensemble de fichiers pour l'exécution du au moins un logiciel.

Ainsi, on peut adapter en temps réel le catalogue de logiciels disponible auprès de chaque serveur de virtualisation.

Le procédé peut en outre comporter une étape de détermination d'un niveau d'utilisation du fichier par des machines virtuelles et la demande de stockage peut alors être effectuée lorsque le niveau d'utilisation est supérieur à un seuil.

La détermination du niveau d'utilisation peut ainsi renseigner sur la popularité d'un fichier image d'un logiciel, d'un système d'exploitation ou autre et distribuer les fichiers les plus populaires.

Ainsi, selon des modes de réalisation, les fichiers image les plus partagés par les machines virtuelles peuvent être distribués dans des serveurs de réplication proches des terminaux utilisateurs.

Dans un mode de réalisation, le procédé comporte en outre les étapes suivantes :
- déterminer une charge d'exécution de machines virtuelles d'un premier serveur stockant le au moins un fichier pour l'exécution du au moins un logiciel,
- sélectionner le premier serveur si la charge déterminée satisfait un critère de charge, et, si la charge déterminée ne satisfait pas le critère de charge
- demander un stockage du au moins un fichier auprès d'un deuxième serveur et sélectionner ce deuxième serveur pour l'exécution du au moins un logiciel.

Selon ce mode de réalisation, il est ainsi possible de décharger un serveur qui exécute déjà un grand nombre de machines virtuelles pour éviter de le saturer et ainsi permettre l'exécution de machines virtuelles pour de nouveaux utilisateurs sans risquer de compromettre la qualité de service pour les utilisateurs déjà connectés au premier serveur.

La demande de stockage peut par exemple être une demande de déplacement du au moins un fichier image pour l'exécution du au moins un logiciel du premier serveur vers le deuxième serveur.

Ainsi, toutes les nouvelles requêtes visant le logiciel pourront être directement redirigées vers le deuxième serveur, déchargeant ainsi le premier serveur de l'exécution des machines virtuelles pour l'exécution de ce logiciel.

Alternativement, le au moins un fichier image pour l'exécution du au moins un logiciel peut être recopié du premier serveur vers le deuxième serveur.

Ainsi, les requêtes visant le logiciel pourront être redirigées vers l'un ou l'autre serveur selon, par exemple, une règle de proximité géographique du serveur par rapport à l'utilisateur.

Selon un mode de réalisation, le procédé comporte en outre les étapes suivantes :
- déterminer un nombre d'instances d'exécution d'un même logiciel sur un troisième serveur, lesdites instances d'exécution provenant d'un ensemble de terminaux localisés dans une même zone géographique,
- comparer ce nombre d'instances d'exécution à un seuil, et
si ce nombre d'instances est supérieur à ce seuil :
- transférer l'exécution des instances vers un quatrième serveur se trouvant à une plus grande proximité géographique de ladite zone géographique que le troisième serveur, et
- sélectionner le quatrième serveur pour transférer les requêtes d'exécution du même logiciel provenant de terminaux localisés dans la zone géographique.

Dans des modes de réalisation, la règle de répartition tient compte de la bande passante disponible pour les serveurs stockant les fichiers image pour l'exécution du logiciel.

Ainsi, on peut tenir compte, en outre, du nombre de machines virtuelles lancées par un serveur, de l'accessibilité de ce serveur eu égard au volume de données échangées par ce serveur. On peut alors éviter de diriger des requêtes vers un serveur dont les communications sont saturées. Dans un mode de réalisation, le procédé comporte en outre une étape d'analyse de niveau de demande d'exécution du logiciel par plusieurs terminaux et le serveur est sélectionné en fonction de ce niveau de demande.

On peut ainsi regrouper les requêtes visant le logiciel et les diriger vers un même serveur pour mutualiser les ressources utiles à l'exécution de ce logiciel.

Le niveau de demande d'exécution peut être relatif à un nombre de requêtes d'exécution d'un même logiciel, un taux de partage d'un même fichier image (relatif à un logiciel, un système d'exploitation ou autre), une zone géographique dans laquelle se trouve le serveur, un créneau temporel ou autre. Il peut être déterminé en comptabilisant des requêtes d'exécution de logiciels ou par analyse statistique de ces requêtes pour déterminer à quels endroits un logiciel est le plus fortement demandé, à quelle heure, etc.

Dans des modes de réalisation, l'ensemble de fichiers comporte :
- un premier sous-ensemble comportant au moins un premier fichier représentant un premier état d'une machine virtuelle après installation d'un système d'exploitation sur cette machine,
- un deuxième sous-ensemble comportant au moins un deuxième fichier représentant un ensemble d'opérations pour mener la machine virtuelle du premier état vers un deuxième état dans lequel un logiciel est installé sur la machine, et
- un troisième sous-ensemble comportant au moins un troisième fichier représentant un troisième état de la machine après lancement du logiciel sur la machine.

En outre, pour exécuter le au moins un logiciel par lancement d'une machine virtuelle, au moins trois fichiers parmi chacun des premier, deuxième et troisième sous-ensembles sont sélectionnés, ces au moins trois fichiers correspondant à cet au moins un logiciel et à un système d'exploitation qui lui est associé.

L'utilisation de ces fichiers pour représenter et lancer une machine virtuelle offre une rapidité de lancement et la possibilité de partager des fichiers

communs entre plusieurs machines virtuelles (par exemple les fichiers de système d'exploitation communs, de logiciels communs ou autre).

Un deuxième aspect de l'invention concerne un programme d'ordinateur ainsi qu'un produit programme d'ordinateur et un support de stockage pour de tels programme et produit, permettant la mise en oeuvre d'un procédé selon le premier aspect de l'invention, lorsque le programme est stocké dans une mémoire d'un serveur de contrôle et exécuté par un processeur d'un tel serveur.

Un troisième aspect de l'invention concerne un serveur de contrôle configuré pour la mise en oeuvre d'un procédé selon le premier aspect de l'invention.

Un tel serveur de contrôle de procédé de fourniture de service d'exécution de logiciel à la demande est défini à la revendication 11.

Un quatrième aspect de l'invention concerne un système configuré pour la mise en oeuvre d'un procédé selon le premier aspect de l'invention.

Un tel système de fourniture de service d'exécution de logiciel à la demande comporte :
- un serveur de contrôle selon le troisième aspect de l'invention, et
- au moins un serveur de lancement de machines virtuelles configuré pour lancer des machines virtuelles à partir de fichiers d'un ensemble de fichiers de lancement de machines virtuelles.

Les objets selon les deuxième, troisième et quatrième aspects de l'invention procurent au moins les mêmes avantages que ceux procurés par le procédé selon le premier aspect. Les objets selon les troisième et quatrième aspects peuvent comporter des moyens pour la mise en oeuvre de caractéristiques optionnelles évoquées pour le premier aspect en termes de procédé.

D'autres caractéristiques et avantages de l'invention apparaîtront à la lecture de la présente description détaillée qui suit, à titre d'exemple non limitatif, et des figures annexées parmi lesquelles, outre la figure 1
- les figures 2a et 2b illustrent un exemple de contexte général de mise en oeuvre d'un mode de réalisation de l'invention;
- la figure 3 est un diagramme illustrant des étapes mises en oeuvre dans un mode de réalisation;
- les figures 4 et 5 sont des organigrammes d'étapes mis en oeuvre pour rediriger des requêtes d'exécution de logiciel selon des modes de réalisation;
- la figure 6 est un organigramme d'étapes mises en oeuvre dans un mode de réalisation pour lancer une machine virtuelle; et
- la figure 7 illustre schématiquement un serveur selon un mode de réalisation de l'invention.

Dans la description qui suit, les machines virtuelles sont lancées à partir d'au moins quatre fichiers image représentant respectivement un système d'exploitation, au moins un logiciel, l'état des périphériques de la machine virtuelle et le contexte utilisateur de la machine virtuelle. Les trois premiers fichiers image sont en lecture seule, seul le fichier de contexte utilisateur est créé à la demande. On optimise alors le temps de démarrage des machines virtuelles et on optimise l'espace mémoire du serveur.

Dans un souci de clarté de l'exposé, on suppose qu'un opérateur de service de fourniture de logiciel à la demande propose un catalogue de logiciels fonctionnant tous avec le même système d'exploitation. Les serveurs mettant en oeuvre les machines virtuelles disposent chacun du fichier image du système d'exploitation et le partagent entre toutes les machines virtuelles qu'ils exécutent.

Dans le cas d'un opérateur proposant des logiciels fonctionnant sous plusieurs systèmes d'exploitation, des fichiers images de ces systèmes d'exploitation seraient répartis selon les mêmes principes que ceux décrits ci-après pour les fichiers images des logiciels.

La **figure 2a** illustre un contexte de mise en oeuvre de modes de réalisation de l'invention.

Le serveur 200 (SERV_PPL) est un serveur de virtualisation principal. Il comporte une unité de stockage 201 (CATALOG) d'un catalogue de logiciels disponibles pour des terminaux utilisateurs (par exemple des ordinateurs personnels, des Set Top Box, des tablettes tactiles ou autre). Le serveur 200 comporte une unité de stockage 201 pour stocker des fichiers image 202 (LOG1), 203 (LOG2) et 204 (LOG3) associés à des logiciels disponibles. Le catalogue pourrait contenir un tout autre nombre de fichiers images selon le nombre de logiciels disponibles. Le serveur 200 comporte également un module de lancement de machines virtuelles 205 (VIRT) permettant le lancement de machines virtuelles pour l'exécution des logiciels du catalogue.

Le serveur 206 (SERV_REPL) est un serveur de réplication dont la structure est similaire à celle du serveur 200. Le serveur 206 comporte une unité de stockage 207 (CATALOG) pour un catalogue de logiciels et un module de lancement de machines virtuelles 208 (VIRT). Le serveur de réplication est utilisé pour déplacer ou recopier des fichiers image du serveur principal, par exemple pour le décharger ou pour rapprocher l'exécution de machines virtuelles des terminaux utilisateurs comme il est décrit dans la suite.

Le nombre de serveurs de réplication et de serveurs principaux est limité ici dans un souci de concision.

Les serveurs 200 et 206 sont gérés par un serveur de contrôle 209 (SERV_CTRL) dont le rôle est détaillé dans la suite.

Dans le contexte de la figure 2a, un terminal utilisateur 210 fait une requête de lancement d'un logiciel fourni par l'opérateur du service de fourniture de logiciel à la demande. Ce logiciel est associé au fichier image 202 stocké auprès du serveur 200 dans l'unité de stockage 207.

La requête est interceptée par le serveur de contrôle 209 qui détermine vers quel serveur diriger la requête selon des critères de répartition de charge entre le serveur principal 200 et le serveur de réplication 206.

On suppose que le serveur principal 200 peut lancer en parallèle, au maximum, trois machines virtuelles. Ce nombre est purement illustratif et peut être différent selon les performances du serveur. Comme aucune machine virtuelle n'est encore lancée, il peut satisfaire la requête. Cette dernière est donc dirigée vers ce serveur et une machine virtuelle 211 est lancée au sein du module de virtualisation 211 par accès au fichier image 202 correspondant au logiciel demandé par le terminal 210.

Toujours dans le contexte de la figure 2a, un terminal 212 fait une requête de lancement du logiciel associé au fichier image 203. La requête est interceptée par le serveur de contrôle 209 qui détermine vers quel serveur diriger la requête. Le nombre maximum de machines virtuelles que le serveur 200 peut exécuter simultanément n'étant pas encore atteint, le serveur de contrôle dirige la requête vers le serveur principal 200. Sur réception de la requête, le serveur 200 lance une nouvelle machine virtuelle 213 (VIRT2) dans le module de virtualisation 205 par accès au fichier image 203 correspondant au logiciel demandé par le terminal 212.

Par ailleurs, toujours dans le même contexte, un terminal 214 fait une requête de lancement du logiciel associé au fichier image 202. La requête est interceptée par le serveur de contrôle 209 qui détermine vers quel serveur diriger la requête. Le serveur principal 200 a déjà lancé deux machines virtuelles 211 et 213. Ce nombre de machines virtuelles lancées simultanément étant inférieur au seuil maximal de trois machines simultanées, le serveur 200 peut donc en lancer une nouvelle. Une nouvelle machine virtuelle 215 (VIRT3) est alors lancée dans le module de virtualisation 205 par accès au fichier image 202 correspondant au logiciel demandé par le terminal 214.

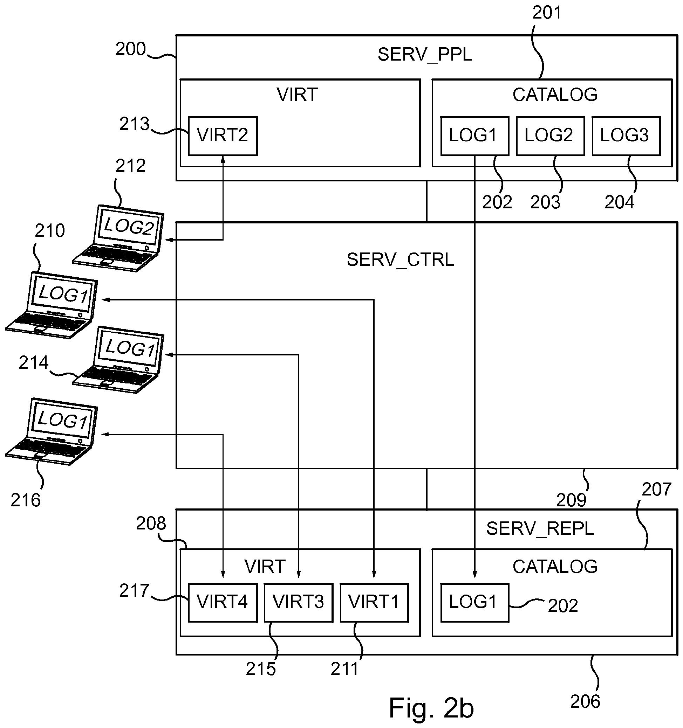

A ce stade, le serveur principal 200 a atteint sa capacité maximale de lancement simultané de machines virtuelles. Le serveur de contrôle met donc en oeuvre une répartition de la charge entre le serveur principal et le serveur de réplication. La mise en oeuvre du serveur de réplication est décrite en référence à la **figure 2b** qui reprend les éléments la figure 2a avec les mêmes signes de référence.

Dans le contexte de la figure 2b, un nouveau terminal 216 fait une requête de lancement du logiciel associé au fichier image 202. Le serveur de contrôle intercepte la requête. Comme le serveur principal a atteint sa charge maximale, une répartition de la charge est opérée entre les serveurs 200 et 206.

Afin de décharger le serveur principal, le fichier image 202 est recopié dans l'unité de stockage 207 du serveur 206 pour permettre au serveur 206 de lancer des machines virtuelles exécutant le logiciel associé dans son module de virtualisation 208. Alternativement, le fichier 202 peut être déplacé, c'est-à-dire qu'une copie du fichier ne serait pas gardée au sein du module principal.

Ensuite, la requête du terminal 216 est dirigée vers le serveur de réplication 206 et, sur réception de la requête, ce dernier lance une machine virtuelle 217 (VIRT4) dans le module de virtualisation 208 par accès au fichier image 202 précédemment recopié.

Pour décharger encore plus le serveur 200, on peut prévoir, de manière optionnelle, de déplacer l'exécution des machines virtuelles 215 et 213 (qui utilisent aussi le fichier image 202) vers le serveur 206. Cette option peut être choisie notamment lorsque le fichier 202 n'est pas recopié mais complètement déplacé du serveur 200 vers le serveur 206.

Le déplacement de l'exécution des machines virtuelles est facilité par l'utilisation des fichiers image car il suffit alors de recopier les fichiers images relatifs à l'état de la machine et au contexte d'utilisation (et éventuellement du fichier image relatif au système d'exploitation).

Dans l'exemple des figures 2a et 2b, la redirection des requêtes vers le serveur de réplication est décidée lorsque le serveur principal atteint sa capacité maximale d'exécution simultanée de machines virtuelles.

Alternativement, ou en combinaison, cette redirection peut être décidée par rapport à la localisation des utilisateurs et à la localisation du (ou des) serveur(s) de réplication.

On suppose par exemple que les terminaux 210, 214 et 216 se situent dans une même zone géographique et que le serveur principal 200 est éloigné de cette zone géographique alors que le serveur de réplication en est proche. Lorsque le nombre de requêtes provenant de cette zone géographique devient important, on peut décider de rediriger les requêtes vers le serveur de réplication car il se trouve proche des terminaux desquels émanent les requêtes. On peut en outre décider le transfert de l'exécution de machines virtuelles en cours pour des terminaux de cette zone vers le serveur de réplication.

Selon une autre alternative, ou combinaison, la redirection est décidée lorsque l'occupation de la bande passante du serveur principal atteint un seuil. Pour éviter de saturer le serveur avec des requêtes, on peut décider de rediriger les requêtes vers le serveur de réplication, qui lui peut avoir une bande passante moins occupée.

Dans ce qui vient d'être décrit, le serveur de contrôle optimise la charge des serveurs en réaction aux requêtes interceptées. Il est toutefois aussi envisageable d'organiser la répartition de charge de manière proactive, avant de constater par exemple que le maximum de charge est atteint sur le serveur principal, en appliquant une politique de répartition prédéfinie.

Par exemple, cette politique de répartition peut mettre en oeuvre des règles basées sur l'utilisation de la bande passante disponible pour les serveurs de virtualisation, selon des critères géographiques ou autre.

On peut aussi envisager des redirections de requêtes selon un critère d'audience (ou de popularité) sur un logiciel donné. Par exemple, lorsque le serveur de contrôle détermine qu'un logiciel connaît une forte demande d'exécution (par exemple par analyse statistique des requêtes reçues), il décide de spécialiser un serveur de virtualisation dans l'exécution de ce logiciel et de diriger toutes les requêtes pour ce logiciel vers ce serveur spécialisé.

Selon cet exemple, le serveur de contrôle peut mettre en oeuvre une analyse du niveau de demande d'exécution d'un logiciel, par exemple en surveillant le nombre de machines virtuelles mettant actuellement en oeuvre ce logiciel ou en comptabilisant le nombre de requêtes demandant l'exécution de ce logiciel. Lorsque ce nombre de machines virtuelles ou ce nombre de requêtes atteint un seuil, le serveur de contrôle peut déterminer que la demande est élevée pour le logiciel et qu'il peut être plus optimal pour la gestion du réseau de regrouper les machines virtuelles des utilisateurs demandant l'exécution de ce logiciel sur des serveurs dédiés ou de distribuer des copies du fichier image associé au logiciel vers d'autres serveurs de réplication.

Le niveau d'audience peut aussi dépendre de l'heure ou du jour. Par exemple, en fin de semaine (le samedi et le dimanche), la plupart des bureaux sont fermés. Les personnes travaillant dans les bureaux utilisant de manière massive les logiciels de traitement de texte ou de tableur, le serveur de contrôle peut distribuer de manière importante les fichiers image relatifs à ces logiciels en copiant ces fichiers image dans un grand nombre de serveurs. Le même mécanisme peut être mis en oeuvre durant les horaires habituels de travail (de huit heures à dix-huit heures par exemple) durant lesquels les personnes travaillant dans les bureaux utilisent ces logiciels. Ainsi, les fichiers image correspondants sont copiés dans des serveurs de réplication de manière plus implorante pour la journée, puis sont effacés en soirée.

Le niveau d'audience peut aussi dépendre de zones géographiques. Par exemple, dans une zone résidentielle, les logiciels demandés peuvent plutôt correspondre à des logiciels de loisir comme des jeux vidéo, des lecteurs de média (vidéo, musique) ou autre. Ainsi, dans ces zones, des serveurs de réplication peuvent être disposés pour offrir en partage des fichiers image relatifs à de tels logiciels. Par exemple encore, dans les zones industrielles, les logiciels demandés peuvent plutôt correspondre à des logiciels de calcul scientifique, des logiciels de modélisation en trois dimensions ou autre. Ainsi, des serveurs de réplication peuvent être disposés dans ces zones pour offrir en partage des fichiers images correspondant à ces logiciels.

La distribution des fichiers image depuis le serveur principal vers le (ou les) serveur(s) de réplication peut être décidée avant une décision de redirection de requête.

Par exemple, le serveur de contrôle peut opérer une évaluation du niveau d'utilisation (ou de popularité) d'un fichier image, c'est-à-dire une évaluation de son partage par des machines virtuelles lancées pour l'exécution de logiciels demandés par des utilisateurs.

On peut par exemple définir un taux de partage (ou taux d'utilisation) d'un fichier image comme le rapport du nombre de copies de ce fichier présentes auprès du serveur principal et des serveurs de réplication sur le nombre de machines virtuelles utilisant une de ces copies. Lorsque ce taux de partage est élevé, cela signifie qu'un grand nombre de machines virtuelles ont besoin de ce fichier pour exécuter un logiciel. Lorsque ce nombre devient important, par exemple lorsqu'il dépasse un seuil donné, le serveur de contrôle peut en déduire que ce fichier est populaire et décider de distribuer ce fichier à d'autres serveurs de réplication. Le serveur de contrôle demande alors le stockage d'une copie du fichier image auprès d'un serveur ne stockant pas de fichier image afin qu'une fois le fichier copié, ce serveur puisse prendre en charge des requêtes d'utilisateurs.

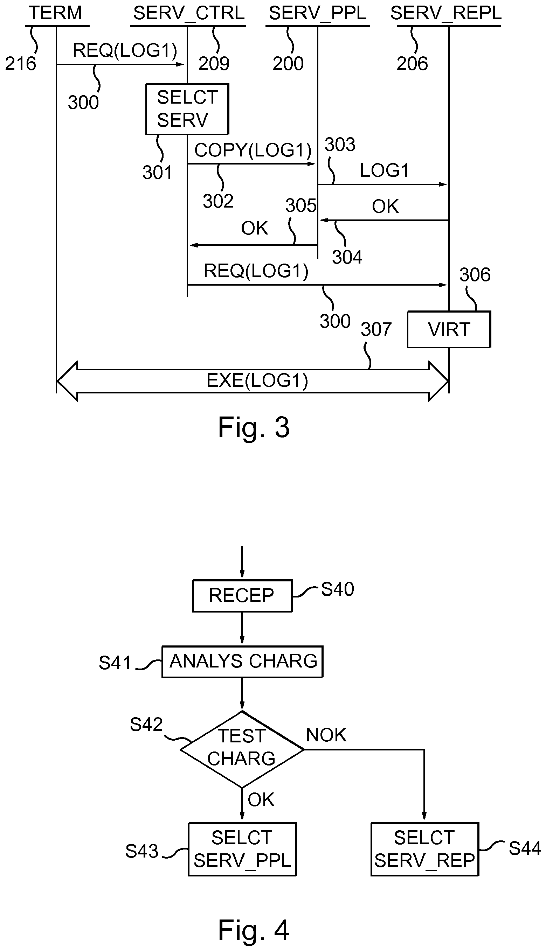

La **figure 3** récapitule les échanges mis en oeuvre entre le terminal 216, le serveur principal 200, le serveur de contrôle 209 et le serveur de réplication 206.

Dans un premier temps, une requête 300 (REQ(LOG1)) de lancement d'un logiciel est envoyée par le terminal 216 (TERM) et interceptée par le serveur de contrôle 209 (SERV_CTRL). Ce dernier contrôle la requête et sélectionne lors d'une étape 301 (SELCT SERV) le serveur vers lequel diriger la requête 300. Il s'agit de déterminer le serveur optimal pour la fourniture de l'exécution du logiciel selon des critères d'optimisation, par exemple de répartition de la charge sur les serveurs 200 (SERV_PPL) et 206 (SERV_REPL).

Lorsque le serveur de contrôle sélectionne un serveur qui ne stocke pas le fichier image du logiciel demandé par le terminal utilisateur, il émet vers le serveur principal 200 (qui contient le catalogue des fichiers image des logiciels disponibles) une requête de copie (ou de déplacement) 302 (COPY(LOG1)) du fichier image en question auprès du serveur sélectionné, en l'occurrence le serveur de réplication 206.

Sur réception de la requête de copie 302, le serveur principal lance la copie du fichier image vers le serveur de réplication avec un message 303 (LOG1). Le serveur de réplication reçoit alors le message 303 et procède à la copie du fichier image dans l'unité de stockage 207. Une fois la copie terminée, le serveur de réplication envoie au serveur principal un message de confirmation 304 (OK). Le serveur principal envoie alors à son tour un message de confirmation 305 (OK) vers le serveur de contrôle.

Le serveur de contrôle dirige alors la requête 300 vers le serveur de réplication qui, sur réception de la requête, lance une machine virtuelle lors de l'étape 306 (VIRT) pour exécuter le logiciel demandé. La mise en oeuvre du logiciel se poursuit alors lors d'une étape 307 (EXE(LOG1)) lors de laquelle le serveur de réplication et le terminal échangent des données d'interface.

La **figure 4** illustre un mode de réalisation selon lequel les requêtes d'exécution de logiciel sont redirigées selon un critère charge d'exécution de machines virtuelles.

Lors d'une étape S40 (RECEP) le serveur de contrôle reçoit une requête de lancement d'un logiciel. Ensuite, lors d'une étape S41 (ANALYS CHARG), le serveur de contrôle détermine la charge d'un ou plusieurs serveurs de virtualisation susceptibles de lancer une machine virtuelle pour exécuter le logiciel. Le serveur de contrôle peut vérifier la capacité d'un serveur par défaut comme par exemple le serveur principal. Alternativement, le serveur de contrôle peut vérifier les capacités de plusieurs serveurs de virtualisation, cette vérification peut être effectuée soit par défaut soit selon des critères prédéfinis définissant des serveurs préférés.

Après avoir déterminé la charge de ce (ou ces) serveur(s), le serveur de contrôle effectue un test lors d'une étape S42 (TEST CHARG), au cours duquel il compare la charge à un seuil de déclenchement de la redirection. Dans l'exemple des figures 2a et 2b, ce seuil est égal à 3 pour le serveur principal car il ne peut pas lancer plus de trois machines virtuelles simultanément.

Si le test est satisfait (OK), c'est-à-dire que la charge du serveur testé est inférieure au seuil, la requête reçue est dirigée vers le serveur testé lors d'une étape S43 (SELCT SERV_PPL). Sinon (NOK), la requête est redirigée vers un serveur dont la charge permet la satisfaction de la requête, lors d'une étape S44 (SELCT SERV_REP). Cette étape S44 peut comporter une demande de stockage auprès du serveur, d'un fichier image pour l'exécution du logiciel

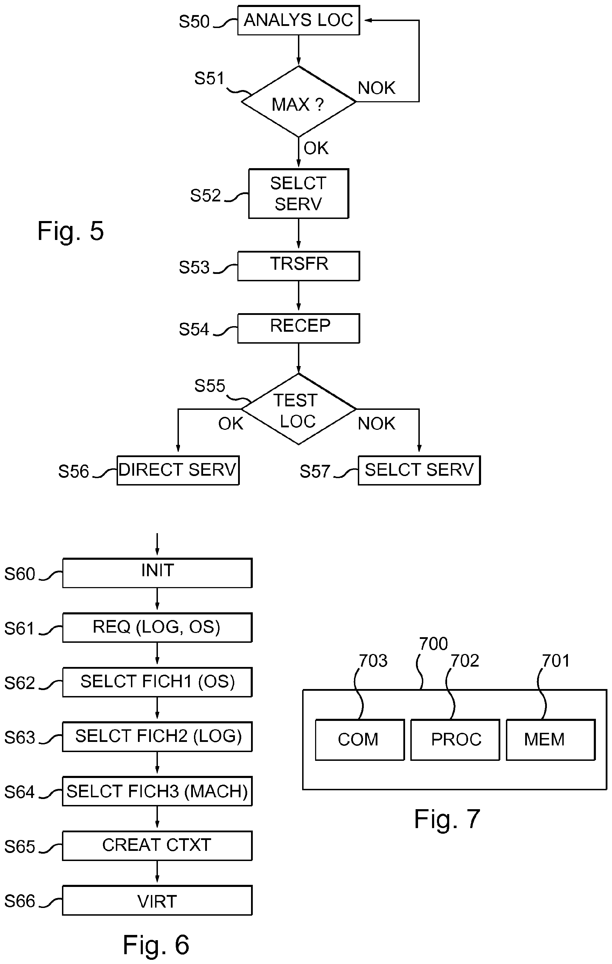

La **figure 5** illustre un mode de réalisation selon lequel les requêtes d'exécution de logiciel sont redirigées selon un critère géographique.

Une première étape S50 consiste à analyser l'origine des requêtes reçues et à déterminer pour un logiciel donné le nombre de requêtes provenant d'une même zone géographique. Cette étape peut être mise en oeuvre à des intervalles de temps réguliers par le serveur de contrôle ou à chaque nouvelle requête. Elle peut également être déclenchée par l'opérateur du service selon des cycles qu'il définit.

Après cette étape d'analyse, on détermine lors d'une étape S51 si on a atteint un seuil de requêtes pour un même logiciel et provenant d'une même zone. Ce seuil correspond par exemple à un nombre en dessous duquel il n'est pas pertinent pour l'opérateur de mettre en oeuvre un nouveau serveur pour des raisons d'économie de ressources.

Si ce seuil n'est pas atteint (NOK), on retourne à l'étape S50. Si ce seuil est atteint (OK), on passe à une étape S52 (SELCT SERV) lors de laquelle on sélectionne un serveur pour rediriger les requêtes de cette zone. Par exemple, on sélectionne un serveur situé dans cette zone. On passe alors à l'étape S53 (TRSFR) lors de laquelle le serveur de contrôle demande aux serveurs exécutant des machines virtuelles pour satisfaire des requêtes provenant de la zone géographique, de transférer l'exécution de ces machines virtuelles vers le serveur sélectionné. Ce transfert est facilité par l'utilisation des fichiers images puisqu'il suffit aux serveurs en question d'échanger les fichiers images, notamment le fichier de contexte utilisateur.

Ensuite, lors de la réception S54 (RECEP) de nouvelles requêtes pour l'exécution du logiciel, le serveur de contrôle effectue un test S55 (TEST LOC) pour localiser l'origine de la requête. Si la requête provient de la zone géographique du serveur sélectionné (OK), il dirige la requête vers ce serveur lors d'une étape S56 (DIRECT SERV). Sinon (NOK), on passe à une étape S57 (SELCT SERV) de sélection d'un autre serveur pour satisfaire la requête.

Pour déterminer l'origine d'une requête, le serveur peut par exemple se baser sur une adresse réseau (comme une adresse IP du protocole Internet) du terminal qui fait la requête. Alternativement, ou en combinaison, chaque requête est accompagnée d'un identifiant d'une zone géographique dans laquelle est située le terminal.

Le lancement d'une machine virtuelle par les serveurs de virtualisation (serveur principal ou serveur de réplication) est décrit en référence à la **figure 6****.**

Le lancement d'une machine virtuelle est basé sur la lecture de fichiers images, disponibles auprès du serveur.

Dans une première étape d'initialisation S60 (INIT), des premier, deuxième et troisième ensembles de fichiers sont mis à disposition du serveur. Ces ensembles comportent respectivement des fichiers image représentant des systèmes d'exploitation, des logiciels et des états de machines virtuelles. Par exemple, ces fichiers sont stockés auprès du serveur (dans les unités de stockage 201 et 207). La copie (ou le déplacement) d'un fichier image peut faire partie de l'étape S60.

Ensuite, lors d'une étape S61 (REQ(LOG, OS)), le serveur reçoit une requête pour le lancement d'un logiciel donné (LOG) fonctionnant sous un système d'exploitation donné (OS). Par exemple, cette requête correspond à la requête 300 de la figure 3.

Sur réception de la requête, le serveur identifie le système d'exploitation, et recherche un fichier correspondant à ce système d'exploitation dans le premier ensemble. Il sélectionne et charge ensuite le fichier correspondant lors de l'étape S62 (SELCT FICH1(OS)). Dans l'exemple décrit en référence aux figures 2a et 2b, comme on a considéré que tous les logiciels fonctionnent sous le même système d'exploitation, cette étape se résume au chargement du seul fichier correspondant au système d'exploitation sous lequel tous les logiciels fonctionnent.

En outre, le serveur identifie le logiciel, et recherche dans le deuxième ensemble, un fichier correspondant à ce logiciel. Dans l'exemple décrit en référence aux figures 2a et 2b le deuxième ensemble correspond aux fichiers image stockés dans l'unité de stockage 201 et 207. Il sélectionne et charge ensuite le fichier correspondant lors de l'étape S63 (SELCT FICH2(LOG)).

Dans le cas où l'utilisateur demande le lancement de plusieurs logiciels, le serveur sélectionne plusieurs fichiers correspondants parmi le deuxième ensemble.

Lorsque le serveur a sélectionné les fichiers correspondant au logiciel et au système d'exploitation, il sélectionne lors de l'étape S64 (SELCT FICH3(MACH)) un fichier parmi le troisième ensemble.

Pour permettre à l'utilisateur de mettre en oeuvre le logiciel, le serveur crée lors de l'étape S65 (CREAT CTXT) un fichier de contexte associé à l'utilisateur et à sa requête. Ce fichier de contexte permet par exemple de faire le lien entre la machine virtuelle et l'utilisateur.

Le serveur peut alors lancer une machine virtuelle lors de l'étape S66 (VIRT) à partir des trois fichiers sélectionnés et du fichier de contexte créé. Le lancement peut par exemple se faire par lecture des fichiers et par reconstitution de la machine virtuelle représentée par la concaténation des trois fichiers image et du fichier de contexte. Une fois que la virtualisation du logiciel est terminée, l'utilisateur peut mettre en oeuvre le logiciel comme si celui-ci était installé et démarré dans son terminal. Le logiciel est alors disponible pour l'utilisateur par exemple via un protocole de diffusion tel que VNC (« Virtual Network Computing »), ou autre.

L'utilisateur dispose alors presque instantanément d'un logiciel démarré et prêt à l'emploi.

Les fichiers image utilisés pour représenter les machines virtuelles représentent l'avancement de la configuration de la machine dans le temps.

Les fichiers images sont des fichiers dits « différentiels » dont l'utilisation est rendue possible notamment par le fait qu'une application hôte, telle un hyperviseur peut intercepter toutes les instructions émises par la machine virtuelle. En effet, l'hyperviseur traduit ces instructions afin qu'elles soient exécutables par les périphériques (processeur, disque dur, mémoire vive, ou autre). Ainsi, il est possible de déduire un ensemble d'opérations minimal pour mener une machine d'un état à un autre.

L'utilisation de fichiers différentiels permet également d'occuper moins d'espace qu'un fichier représentant complètement une machine virtuelle. En effet, les fichiers du deuxième ensemble ne comportent que les opérations nécessaires au changement d'état.

Le partage de ces fichiers image sur un ou plusieurs serveurs permet également d'économiser de l'espace de stockage sur ces serveurs, car le lancement de plusieurs machines virtuelles peut se faire en utilisant un même fichier image partagé, ce qui évite ainsi de recréer ou de recopier ce même fichier image pour chaque machine virtuelle.

Leur création est décrite dans ce qui suit.

Dans un premier temps, une machine virtuelle est démarrée et un système d'exploitation est installé sur cette machine. Ensuite, cette machine est gelée par commande de l'hyperviseur (périphériques virtuels stoppés, écriture dans le fichier image stoppée) et l'image de la machine est stockée dans un premier fichier image que l'on place en lecture seule. Ainsi, le fichier ne peut plus être modifié et il peut servir à démarrer des machines virtuelles avec le système d'exploitation déjà prêt à l'emploi.

On démarre ensuite une nouvelle machine virtuelle à partir du premier fichier. Cette machine virtuelle fait alors fonctionner un système d'exploitation sans logiciel installé. Cette image est alors mise en lecture seule.

On crée alors un fichier vierge (héritant du premier fichier), et on installe sur la machine virtuelle nouvellement démarrée un logiciel. Les modifications alors apportées à la machine virtuelle sont alors sauvegardées dans le fichier vierge (après gel de la machine virtuelle comme précédemment).

A ce stade, on dispose d'un deuxième fichier permettant de passer d'un état de la machine dans lequel aucun logiciel n'est installé à un état dans lequel un logiciel est installé. Le deuxième fichier est alors placé en lecture seule.

On crée alors un nouveau fichier vierge, et on lance le logiciel sur la machine virtuelle. On gèle la machine juste après le démarrage du logiciel, puis on stocke les données relatives à l'état de la machine dans le fichier créé.

A ce stade, on dispose alors d'un troisième fichier décrivant la machine virtuelle après lancement du logiciel. Le troisième fichier est alors placé en lecture seule. Les fichiers 202, 203 et 204 sont de ce type.

Lorsqu'une machine virtuelle est lancée par lecture par exemple de fichiers images relatifs à un système d'exploitation, un logiciel et un état machine, la machine virtuelle se trouve dans un état figé dans lequel le logiciel est lancé et dans lequel un ensemble de périphériques virtuels est dans un état prédéterminé (par exemple la mémoire simulée par la machine virtuelle stocke un certain nombre de données, la souris simulée par la machine virtuelle pointe une zone particulière d'un écran lui aussi simulé).

Afin de permettre l'utilisation de ce système virtuel par un terminal utilisateur on rattache les éléments simulés par la machine virtuelle à des éléments physiques réels. Par exemple, il s'agit de rattacher la souris simulée à une souris réellement présente auprès d'un utilisateur, de rattacher un écran simulé à un écran réel. A cet effet, des fichiers image de contexte sont créés pour chaque utilisateur d'une machine virtuelle lancée.

Comme évoqué précédemment, on a considéré dans l'exemple présenté que tous les logiciels fonctionnent sous le même système d'exploitation. De ce fait, le fichier image de ce système d'exploitation est présent auprès du serveur principal et du serveur de réplication.

Un programme d'ordinateur pour la mise en oeuvre d'un procédé selon un mode de réalisation de l'invention peut-être réalisé à partir des diagrammes des figures 3 à 6 et de la présente description détaillée.

Un serveur de contrôle selon un mode de réalisation est décrit en référence à la **figure 7****.**

Le serveur d'application 700 de la figure 7 comporte une unité de mémoire 701 (MEM). Cette unité de mémoire comporte une mémoire vive pour stocker de manière non durable des données de calcul utilisées lors de la mise en oeuvre d'un procédé conforme à l'invention, selon divers modes de réalisation. L'unité de mémoire comporte par ailleurs une mémoire non volatile (par exemple du type EEPROM) pour stocker par exemple un programme d'ordinateur, selon un mode de réalisation, pour son exécution par un processeur (non représenté) d'une unité de traitement 702 (PROC) du serveur d'application. Par exemple, l'unité de mémoire stocke un ensemble de règles définies par un opérateur de service de logiciel à la demande, pour rediriger des requêtes d'exécution de logiciel à la demande. Cette unité de mémoire peut également stocker un état de charge d'un ensemble de serveurs de virtualisation gérés par le serveur le contrôle. Le serveur de contrôle comporte par ailleurs une unité de communication 703 (COM) pour mettre en oeuvre des communications, notamment pour recevoir et renvoyer des requêtes d'exécution de logiciel à la demande, et pour envoyer des requêtes de copie ou de déplacement de fichiers image, conformément à divers modes de réalisation d'un procédé selon l'invention.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention telle que revendiquée.

## Revendications

1. Procédé de fourniture de service d'exécution de logiciel à la demande, **caractérisé en ce qu'**il comporte les étapes suivantes :
- recevoir (S40, S54), de la part d'au moins un terminal (216), au moins une requête (300) d'exécution d'au moins un logiciel, par une machine virtuelle lancée sur un serveur de lancement de machines virtuelles à partir de fichiers image d'un ensemble de fichiers image de lancement de machines virtuelles, ledit ensemble de fichiers image comportant :
o un premier sous-ensemble comportant au moins un premier fichier image représentant un premier état d'une machine virtuelle après installation d'un système d'exploitation sur cette machine ;
o un deuxième sous-ensemble comportant au moins un deuxième fichier image représentant un ensemble d'opérations pour mener la machine virtuelle du premier état vers un deuxième état dans lequel un logiciel est installé sur la machine ; et
o un troisième sous-ensemble comportant au moins un troisième fichier image représentant un troisième état de la machine après lancement du logiciel sur la machine ;
au moins trois fichiers image parmi chacun des premier, deuxième et troisième sous-ensembles étant sélectionnées (S62, S63, S64) pour exécuter ledit au moins un logiciel par lancement d'une machine virtuelle, lesdits au moins trois fichiers image correspondant audit au moins un logiciel et à un système d'exploitation associé audit au moins un logiciel, et
- sélectionner (301), parmi un ensemble de serveurs (200, 206) de lancement de machines virtuelles, un serveur vers lequel diriger la requête, selon une règle de répartition de charge d'exécution de machines virtuelles par les serveurs dudit ensemble de serveurs,
- diriger la requête vers le serveur sélectionné,
- exécuter une machine virtuelle dans le serveur sélectionné, par concaténation des au moins trois fichiers image sélectionnés.

2. Procédé selon la revendication 1, dans lequel le serveur sélectionné stocke au moins un fichier image (202, 203, 204) dudit ensemble de fichiers image pour l'exécution dudit au moins un logiciel.

3. Procédé selon la revendication 1, comportant en outre une étape de demande de stockage auprès du serveur sélectionné, d'au moins un fichier image (202, 203, 204) dudit ensemble de fichiers image pour l'exécution dudit au moins un logiciel.

4. Procédé selon la revendication 3, comportant en outre une étape de détermination d'un niveau d'utilisation dudit au moins un fichier image par des machines virtuelles et dans lequel la demande de stockage est effectuée lorsque ledit niveau d'utilisation est supérieur à un seuil.

5. Procédé selon la revendication 3, comportant en outre les étapes suivantes :
- déterminer (S41) une charge d'exécution de machines virtuelles d'un premier serveur stockant ledit au moins un fichier image pour l'exécution dudit au moins un logiciel,
- sélectionner (S43) ledit premier serveur si la charge déterminée satisfait un critère de charge, et, si la charge déterminée ne satisfait pas le critère de charge,
- demander un stockage dudit au moins un fichier image auprès d'un deuxième serveur et sélectionner (S44) ledit deuxième serveur pour l'exécution dudit au moins un logiciel.

6. Procédé selon la revendication 5, dans lequel la demande de stockage est une demande de déplacement dudit au moins un fichier image pour l'exécution dudit au moins un logiciel, du premier serveur vers le deuxième serveur.

7. Procédé selon la revendication 5, dans lequel le au moins un fichier image pour l'exécution dudit au moins un logiciel est recopié du premier serveur vers le deuxième serveur.

8. Procédé selon la revendication 1, comportant en outre les étapes suivantes :
- déterminer (S50) un nombre d'instances d'exécution d'un même logiciel sur un troisième serveur, lesdites instances d'exécution provenant d'un ensemble de terminaux localisés dans une même zone géographique,
- comparer (S51) ce nombre d'instances d'exécution à un seuil, et
- si ce nombre d'instances est supérieur à ce seuil :
- transférer (S53) l'exécution desdites instances vers un quatrième serveur se trouvant à une plus grande proximité géographique de ladite zone géographique que le troisième serveur, et
- sélectionner (S55, S56) ledit quatrième serveur pour transférer les requêtes d'exécution dudit même logiciel provenant de terminaux localisés dans ladite zone géographique.

9. Procédé selon la revendication 1, comportant en outre une étape d'analyse de niveau de demande d'exécution dudit logiciel par plusieurs terminaux et dans lequel le serveur est sélectionné en fonction dudit niveau de demande.

10. Programme d'ordinateur comportant des instructions pour la mise en oeuvre d'un procédé selon la revendication 1 lorsqu'il est exécuté par un processeur d'un serveur de contrôle de procédé de fourniture de service d'exécution de logiciel à la demande.

11. Serveur de contrôle (700, 209) de procédé de fourniture de service d'exécution de logiciel à la demande comportant :
- une unité de communication (703) configurée pour recevoir, de la part d'au moins un terminal (216), au moins une requête d'exécution d'au moins un logiciel par une machine virtuelle lancée sur un serveur de lancement de machines virtuelles à partir de fichiers image d'un ensemble de fichiers-image de lancement de machines virtuelles, ledit ensemble de fichiers image comportant :
∘ un premier sous-ensemble comportant au moins un premier fichier image représentant un premier état d'une machine virtuelle après installation d'un système d'exploitation sur cette machine ;
∘ un deuxième sous-ensemble comportant au moins un deuxième fichier image représentant un ensemble d'opérations pour mener_la machine virtuelle du premier état vers un deuxième état dans lequel un logiciel est installé sur la machine ; et
∘ un troisième sous-ensemble comportant au moins un troisième fichier image représentant un troisième état de la machine après lancement du logiciel sur la machine ;
au moins trois fichiers image parmi chacun des premier, deuxième et troisième sous-ensembles étant sélectionnées (S62, S63, S64) pour exécuter ledit au moins un logiciel par lancement d'une machine virtuelle, lesdits au moins trois fichiers image correspondant audit au moins un logiciel et à un système d'exploitation associé audit au moins un logiciel, et
- une unité de traitement (702) configurée pour sélectionner, parmi un ensemble de serveurs (200, 206) de lancement de machines virtuelles, un serveur vers lequel diriger la requête, selon une règle de répartition de charge d'exécution de machines virtuelles par les serveurs dudit ensemble de serveurs, et configurée pour diriger la requête vers le serveur sélectionné.

12. Système de fourniture de service d'exécution de logiciel à la demande comportant :
- un serveur de contrôle (700, 209) selon la revendication 11, et
- au moins un serveur de lancement de machines virtuelles (200, 206) configuré pour lancer des machines virtuelles à partir de fichiers image d'un ensemble de fichiers image de lancement de machines virtuelles.

13. Système selon la revendication 12, dans lequel le au moins un serveur de lancement de machines virtuelles (200, 206) comporte une unité de mémoire (201, 207) pour stocker ledit ensemble de fichiers image qui comporte :
- un premier sous-ensemble comportant au moins un premier fichier image représentant un premier état d'une machine virtuelle après installation d'un système d'exploitation sur cette machine ;
- un deuxième sous-ensemble comportant au moins un deuxième fichier image représentant un ensemble d'opérations pour mener la machine virtuelle du premier état vers un deuxième état dans lequel un logiciel est installé sur la machine ; et
- un troisième sous-ensemble comportant au moins un troisième fichier image représentant un troisième état de la machine après lancement du logiciel sur la machine ;
et dans lequel, pour exécuter ledit au moins un logiciel par lancement d'une machine virtuelle, au moins trois fichiers image parmi chacun des premier, deuxième et troisième sous-ensembles sont sélectionnés, lesdits au moins trois fichiers image correspondant audit au moins un logiciel et à un système d'exploitation associé audit au moins un logiciel.

## Patentansprüche

1. Verfahren zur On-Demand-Lieferung eines Software-Ausführungsdienstes, **dadurch gekennzeichnet, dass** es die folgenden Schritte umfasst:
- Empfangen (S40, S54) von mindestens einem Terminal (216) mindestens eines Antrags (300) auf Ausführung mindestens einer Software durch eine virtuelle Maschine, die auf einem Startserver von virtuellen Maschinen auf Basis von Bilddateien einer Gesamtheit von Startbilddateien von virtuellen Maschinen gestartet wird, wobei die Gesamtheit von Bilddateien umfasst:
- eine erste Untereinheit, umfassend mindestens eine erste Bilddatei, die einen ersten Zustand einer virtuellen Maschine nach Installation eines Betriebssystems auf dieser Maschine darstellt;
- eine zweite Untereinheit, umfassend mindestens eine zweite Bilddatei, die eine Gesamtheit von Operationen darstellt, um die virtuelle Maschine vom ersten Zustand in einen zweiten Zustand, in dem eine Software auf der Maschine installiert ist, zu bringen; und
- eine dritte Untereinheit, umfassend mindestens eine dritte Bilddatei, die einen dritten Zustand der Maschine nach Start der Software auf der Maschine darstellt;
wobei mindestens drei Bilddateien unter jeder der ersten, zweiten und dritten Untereinheiten ausgewählt (S62, S63, S64) sind, um die mindestens eine Software durch Start einer virtuellen Maschine auszuführen, wobei die mindestens drei Bilddateien der mindestens einen Software und einem der mindestens einen Software zugeordneten Betriebssystem entsprechen, und
- Auswählen (301), unter einer Gesamtheit von Startservern (200, 206) von virtuellen Maschinen, eines Servers, an den der Antrag zu richten ist, nach einer Lastverteilungsregel für die Ausführung von virtuellen Maschinen durch die Server der Gesamtheit von Servern,
- Richten des Antrags an den ausgewählten Server,
- Ausführen einer virtuellen Maschine in dem ausgewählten Server durch Verkettung der mindestens drei ausgewählten Bilddateien.

2. Verfahren nach Anspruch 1, bei dem der ausgewählte Server mindestens eine Bilddatei (202, 203, 204) der Gesamtheit von Bilddateien für die Ausführung der mindestens einen Software speichert.

3. Verfahren nach Anspruch 1, ferner umfassend einen Schritt der Anforderung einer Speicherung mindestens einer Bilddatei (202, 203, 204) der Gesamtheit von Bilddateien beim ausgewählten Server für die Ausführung der mindestens einen Software.

4. Verfahren nach Anspruch 3, ferner umfassend einen Schritt der Bestimmung eines Nutzungsniveaus der mindestens einen Bilddatei durch virtuelle Maschinen, bei dem die Speicheranforderung ausgeführt wird, wenn das Nutzungsniveau über einer Grenze liegt.

5. Verfahren nach Anspruch 3, ferner umfassend die folgenden Schritte:
- Bestimmen (S41) einer Ausführungslast von virtuellen Maschinen eines ersten Servers, der die mindestens eine Bilddatei speichert, für die Ausführung der mindestens einen Software,
- Auswählen (S43) des ersten Servers, wenn die bestimmte Last einem Lastkriterium entspricht, und, wenn die bestimmte Last nicht dem Lastkriterium entspricht,
- Anfordern einer Speicherung der mindestens einen Bilddatei bei einem zweiten Server und Auswählen (S44) des zweiten Servers für die Ausführung der mindestens einen Software.

6. Verfahren nach Anspruch 5, bei dem die Speicheranforderung eine Anforderung der Verschiebung der mindestens einen Bilddatei für die Ausführung der mindestens einen Software vom ersten Server zum zweiten Server ist.

7. Verfahren nach Anspruch 5, bei dem die mindestens eine Bilddatei für die Ausführung der mindestens einen Software vom ersten Server in den zweiten Server kopiert wird.

8. Verfahren nach Anspruch 1, ferner umfassend die folgenden Schritte:
- Bestimmen (S50) einer Anzahl von Ausführungsinstanzen einer selben Software auf einem dritten Server, wobei die Ausführungsinstanzen von einer Gesamtheit von in einer selben geografischen Zone befindlichen Terminals stammen,
- Vergleichen (S51) dieser Anzahl von Ausführungsinstanzen mit einer Grenze, und
- wenn diese Anzahl von Ausführungsinstanzen über dieser Grenze liegt:
- Übertragen (S53) der Ausführung dieser Instanzen auf einen vierten Server, der sich in einer größeren geografischen Nähe zu der geografischen Zone als der dritte Server befindet, und
- Auswählen (S55, S56) des vierten Servers, um die Anträge auf Ausführung derselben Software, die von in der geografischen Zone befindlichen Terminals stammen, zu übertragen.

9. Verfahren nach Anspruch 1, ferner umfassend einen Schritt der Analyse eines Niveaus einer Ausführungsanforderung der Software durch mehrere Terminals, wobei der Server in Abhängigkeit von dem Anforderungsniveau ausgewählt wird.

10. Computerprogramm, umfassend Befehle für den Einsatz eines Verfahrens nach Anspruch 1, wenn es von einem Prozessor eines Servers zur Kontrolle eines Verfahrens zur On-Demand-Lieferung eines Software-Ausführungsdienstes ausgeführt wird.

11. Server zur Kontrolle (700, 209) eines Verfahrens zur On-Demand-Lieferung eines Software-Ausführungsdienstes, umfassend:
- eine Kommunikationseinheit (703), die dazu vorgesehen ist, von mindestens einem Terminal (216) mindestens einen Antrag auf Ausführung mindestens einer Software durch eine virtuelle Maschine zu empfangen, die auf einem Startserver von virtuellen Maschinen auf Basis von Bilddateien einer Gesamtheit von Startbilddateien von virtuellen Maschinen gestartet wird, wobei die Gesamtheit von Bilddateien umfasst:
- eine erste Untereinheit, umfassend mindestens eine erste Bilddatei, die einen ersten Zustand einer virtuellen Maschine nach Installation eines Betriebssystems auf dieser Maschine darstellt;
- eine zweite Untereinheit, umfassend mindestens eine zweite Bilddatei, die eine Gesamtheit von Operationen darstellt, um die virtuelle Maschine vom ersten Zustand in einen zweiten Zustand, in dem eine Software auf der Maschine installiert ist, zu bringen; und
- eine dritte Untereinheit, umfassend mindestens eine dritte Bilddatei, die einen dritten Zustand der Maschine nach Start der Software auf der Maschine darstellt;
wobei mindestens drei Bilddateien unter jeder der ersten, zweiten und dritten Untereinheiten ausgewählt (S62, S63, S64) sind, um die mindestens eine Software durch Start einer virtuellen Maschine auszuführen, wobei die mindestens drei Bilddateien der mindestens einen Software und einem der mindestens einen Software zugeordneten Betriebssystem entsprechen, und
- eine Bearbeitungseinheit (702), die dazu vorgesehen ist, unter einer Gesamtheit von Startservern (200, 206) von virtuellen Maschinen einen Server, an den der Antrag zu richten ist, nach einer Lastverteilungsregel für die Ausführung von virtuellen Maschinen durch die Server der Gesamtheit von Servern auszuwählen, und die dazu vorgesehen ist, den Antrag an den ausgewählten Server zu richten.

12. System zur On-Demand-Lieferung eines Software-Ausführungsdienstes, umfassend:
- einen Kontrollserver (700, 209) nach Anspruch 11, und
- mindestens einen Startserver von virtuellen Maschinen (200, 206), der dazu vorgesehen ist, virtuelle Maschinen auf Basis von Bilddateien einer Gesamtheit von Startbilddateien von virtuellen Maschinen zu starten.

13. System nach Anspruch 12, bei dem der mindestens eine Startserver von virtuellen Maschinen (200, 206) eine Speichereinheit (201, 207) umfasst, um die Gesamtheit von Bilddateien zu speichern, umfassend:
- eine erste Untereinheit, umfassend mindestens eine erste Bilddatei, die einen ersten Zustand einer virtuellen Maschine nach Installation eines Betriebssystems auf dieser Maschine darstellt;
- eine zweite Untereinheit, umfassend mindestens eine zweite Bilddatei, die eine Gesamtheit von Operationen darstellt, um die virtuelle Maschine vom ersten Zustand in einen zweiten Zustand, in dem eine Software auf der Maschine installiert ist, zu bringen; und
- eine dritte Untereinheit, umfassend mindestens eine dritte Bilddatei, die einen dritten Zustand der Maschine nach Start der Software auf der Maschine darstellt;
und bei dem für die Ausführung der mindestens einen Software durch Start einer virtuellen Maschine mindestens drei Bilddateien unter jeder der ersten, zweiten und dritten Untereinheiten ausgewählt werden, wobei die mindestens drei Bilddateien der mindestens einen Software und einem der mindestens einen Software zugeordneten Betriebssystem entsprechen.

## Claims

1. Method for providing a service for on-demand software execution, **characterized in that** it comprises the following steps:
- receiving (S40, S54), from at least one terminal (216), at least one request (300) for the execution of at least one software package by a virtual machine launched on a virtual-machine-launching server from image files of a set of virtual-machine-launching image files, said set of image files comprising:
∘ a first subset, comprising at least one first image file representing a first state of a virtual machine following the installation of an operating system on this machine;
∘ a second subset, comprising at least one second image file representing a set of operations to transfer the virtual machine from the first state to a second state in which a software package is installed on the machine; and
∘ a third subset, comprising at least one third image file representing a third state of the machine following the launching of the software package on the machine;
at least three image files from each of the first, second and third subsets being selected (S62, S63, S64) in order to execute said at least one software package by launching a virtual machine, said at least three image files corresponding to said at least one software package and to an operating system associated with said at least one software package, and
- selecting (301), from a set of virtual-machine-launching servers (200, 206), a server to which to direct the request, according to a load distribution rule for the execution of virtual machines by the servers of said set of servers,
- directing the request to the selected server,
- executing a virtual machine in the selected server through concatenation of the at least three selected image files.

2. Method according to Claim 1, in which the selected server stores at least one image file (202, 203, 204) of said set of image files for the execution of said at least one software package.

3. Method according to Claim 1, furthermore comprising a step of requesting storage, from the selected server, of at least one image file (202, 203, 204) of said set of image files for the execution of said at least one software package.

4. Method according to Claim 3, furthermore comprising a step of determining a level of usage of said at least one image file by virtual machines, in which the storage request is made when said usage level is greater than a threshold.

5. Method according to Claim 3, furthermore comprising the following steps:
- determining (S41) an execution load of virtual machines of a first server storing said at least one image file for the execution of said at least one software package,
- selecting (S43) said first server if the determined load meets a load criterion, and, if the determined load does not meet the load criterion,
- requesting a storage of said at least one image file from a second server and selecting (S44) said second server for the execution of said at least one software package.

6. Method according to Claim 5, in which the storage request is a request to move said at least one image file for the execution of said at least one software package from the first server to the second server.

7. Method according to Claim 5, in which the at least one image file for the execution of said at least one software package is copied from the first server to the second server.

8. Method according to Claim 1, furthermore comprising the following steps:
- determining (S50) a number of instances of execution of the same software package on a third server, said execution instances originating from a set of terminals located in the same geographical area,
- comparing (S51) this number of execution instances with a threshold, and
- if this number of instances is greater than this threshold:
- transferring (S53) the execution of said instances to a fourth server located at a closer geographical proximity to said geographical area than the third server, and
- selecting (S55, S56) said fourth server to transfer the requests for the execution of said same software package originating from terminals located in said geographical area.

9. Method according to Claim 1, furthermore comprising a step of analysing the level of demand for the execution of said software package by a plurality of terminals, in which the server is selected according to said level of demand.

10. Computer program comprising instructions for the implementation of a method according to Claim 1 when it is executed by a processor of a server for controlling the method for providing a service for on-demand software execution.

11. Server (700, 209) for controlling the method for providing a service for on-demand software execution, comprising:
- a communication unit (703), configured to receive, from at least one terminal (216), at least one request for the execution of at least one software package by a virtual machine launched on a virtual-machine-launching server from image files of a set of virtual-machine-launching image files, said set of image files comprising:
∘ a first subset, comprising at least one first image file representing a first state of a virtual machine following the installation of an operating system on this machine;
∘ a second subset, comprising at least one second image file representing a set of operations to transfer the virtual machine from the first state to a second state in which a software package is installed on the machine; and
∘ a third subset, comprising at least one third image file representing a third state of the machine following the launching of the software package on the machine;
at least three image files from each of the first, second and third subsets being selected (S62, S63, S64) in order to execute said at least one software package by launching a virtual machine, said at least three image files corresponding to said at least one software package and to an operating system associated with said at least one software package, and
- a processing unit (702), configured to select, from a set of virtual-machine-launching servers (200, 206), a server to which to direct the request, according to a load distribution rule for the execution of virtual machines by the servers of said set of servers, and configured to direct the request to the selected server.

12. System for providing a service for on-demand software execution, comprising:
- a control server (700, 209) according to Claim 11, and
- at least one virtual-machine-launching server (200, 206) configured to launch virtual machines from image files of a set of virtual-machine-launching image files.

13. System according to Claim 12, in which the at least one virtual-machine-launching server (200, 206) comprises a memory unit (201, 207) to store said set of image files which comprises:
- a first subset, comprising at least one first image file representing a first state of a virtual machine following the installation of an operating system on this machine;
- a second subset, comprising at least one second image file representing a set of operations to transfer the virtual machine from the first state to a second state in which a software package is installed on the machine; and
- a third subset, comprising at least one third image file representing a third state of the machine following the launching of the software package on the machine;
and in which, in order to execute said at least one software package by launching a virtual machine, at least three image files from each of the first, second and third subsets are selected, said at least three image files corresponding to said at least one software package and to an operating system associated with said at least one software package.
